(19) Europäisches Patentamt
European Patent Office
Office européen des brevets

(11) EP 1 978 052 B1

(12) **EUROPÄISCHE PATENTSCHRIFT**

(45) Veröffentlichungstag und Bekanntmachung des Hinweises auf die Patenterteilung:
**05.10.2011 Patentblatt 2011/40**

(21) Anmeldenummer: **08001403.8**

(22) Anmeldetag: **25.01.2008**

(51) Int Cl.:
***C08G 73/00*** *(2006.01)* ***C08G 73/08*** *(2006.01)*
***C08G 73/22*** *(2006.01)* ***C23C 18/00*** *(2006.01)*
***C23C 22/00*** *(2006.01)* ***C08J 7/00*** *(2006.01)*

(54) **Beschichtung eines Bauteils**

Coating of a component

Revêtement d'un composant

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.02.2007 DE 102007007879**

(43) Veröffentlichungstag der Anmeldung:
**08.10.2008 Patentblatt 2008/41**

(73) Patentinhaber: **Helmholtz-Zentrum Geesthacht Zentrum für Material- und Küstenforschung GmbH**
**21502 Geesthacht (DE)**

(72) Erfinder:
- **De Figueiredo Gomes, Dominique**
  **21641 Apensen (DE)**
- **Abetz, Prof. Dr. Volker**
  **21335 Lüneburg (DE)**
- **Kannan Mathan, Bobby**
  **Press Colony**
  **Coimbatore 641019 (IN)**
- **Dietzel, Wolfgang**
  **21502 Geesthacht (DE)**

(74) Vertreter: **Grebner, Christian Georg Rudolf**
**Patentanwälte**
**Seemann & Partner**
**Ballindamm 3**
**20095 Hamburg (DE)**

(56) Entgegenhaltungen:
**US-A- 3 410 834** **US-A- 3 567 698**
**US-B1- 6 291 635**

- **MURATA H ET AL: "A NOVEL FABRICATION TECHNIQUE AND NEW CONJUGATED POLYMERS FOR MULTILAYER POLYMER LIGHT-EMITTING DIODES" POLYMERS FOR ADVANCED TECHNOLOGIES, WILEY & SONS, BOGNOR REGIS, GB, Bd. 8, Nr. 7, 1. Juli 1997 (1997-07-01), Seiten 459-464, XP000695529 ISSN: 1042-7147**

EP 1 978 052 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Beschichten eines aus Magnesium oder dessen Legierungen hergestellten Bauteils an dessen Oberfläche sowie eine Beschichtung eines aus Magnesium oder dessen Legierungen hergestellten Bauteils, wobei eine Beschichtungslösung auf eine Oberfläche des Bauteils zum Beschichten der Oberfläche aufgebracht ist oder wird. Darüber hinaus betrifft die Erfindung eine Verwendung mit einer Beschichtungslösung.

Es ist bekannt, dass Magnesium und seine Legierungen leichte und unedle metallische Konstruktionswerkstoffe sind. Daher neigen Magnesium und die Legierungen daraus sehr stark zu Korrosion.

Das Korrosionsverhalten von Magnesium bzw. Magnesiumoberflächen kann durch Konversions- bzw. Reaktionsschichten und durch anorganische oder organische Beschichtungen modifiziert werden. Beispielsweise werden bei Verfahren, bei denen in einem Elektrolytplasma eine anodische Oxidation oder Substratoberfläche erfolgt, feste und dichte Schichten aus Magnesiumoxiden und/oder -phosphaten mit elektrischer Isolationswirkung und einem guten Verschleißwiderstand hergestellt. Jedoch erfordern diese Schichten in der Regel zusätzlich eine Versiegelung durch eine organische Beschichtung (Top-Coat), um einen Langzeit-Korrosionsschutz zu gewährleisten. Außerdem sind diese Verfahren vergleichsweise kostspielig.

Magnesium besitzt zwar an Luft einen guten Korrosionswiderstand, ist jedoch in Chlorid-, Sulfat-, Karbonat- und Nitrat-haltigen Lösungen nicht stabil. Magnesiumlegierungen bilden erst bei pH-Werten über 11 stabile Deckschichten, so dass für den technisch relevanten pH-Bereich zwischen 4,5 und 8,5, in dem Aluminium stabile Deckschichten entwickelt, keine wirksamen und bei Beschädigungen von selbst ausheilenden Schutzschichten existieren.

Zudem ist Magnesium der unedelste Konstruktionswerkstoff, so dass es einerseits zu starker Auflösung in Folge mikrogalvanischer Korrosion neigt, insbesondere hervorgerufen durch Fe-, Ni- und Cohaltige Verunreinigungen und andererseits bei Magnesiumlegierungen zu interner galvanischer Korrosion durch eine zweite edlere Phase oder Einschlüsse kommt. Da Magnesium häufig im Verbund mit edleren Werkstoffen eingesetzt wird, ist bei Anwendungen in aggressiven Medien und/oder der Anwesenheit von Wasser eine Beschichtung der Bauteile zur Vermeidung der Kontaktkorrosion unerlässlich.

Das Korrosions- und Verschleißverhalten von Magnesiumoberflächen kann, je nach Verwendung und Einsatz, durch Konversions- bzw. Reaktionsschichten und durch anorganische oder auch organische Beschichtungen modifiziert werden.

Beispielsweise sind in US 2006/0063872 A1, EP 0 949 353 B1, US 2005/0067057 A1, US 4,973,393, US 5,993,567, WO 99/02759 A1, und DE 199 13 242 C2 zahlreiche Verfahren oder Maßnahmen zum Korrosionsschutz von Magnesium und seinen Legierungen beschrieben.

In US-A-3 567 698 sind Silarylene-1,3,4-Oxadiazole sowie die Herstellung dieser silokonhaltigen Polyoxadiazole beschrieben. Gemäß einem zweistufigen Verfahren werden zunächst Polyhydrazide als Prepolymere gebildet, die anschließend durch eine thermische Behandlung unter Vakuum in Polyoxadiazole umgewandelt werden.

Ferner offenbart US-A-3 410 834 vernetzte 1,3,4-Polyoxadiazole, die thermisch stabil sind und ein hohes Molekulargewicht aufweisen. Die Herstellung der vernetzten Polyoxadiazole erfolgt über einen zweistufigen Prozess, wobei zunächst Polyhydrazide hergestellt werden, so dass danach Polyoxadiazole unter Verwendung der Polyhydrazide als Prepolymere hergestellt werden.

Ausgehend von diesem Stand der Technik besteht die Aufgabe der Erfindung darin, eine günstige und einfache korrosionsbeständige sowie chromfreie Beschichtung für Magnesiumwerkstoffe oder Bauteile aus Magnesium oder Magnesiumlegierungen bzw. für Bauteile mit Magnesium-haltigen Oberflächen bereit zu stellen, wobei die Beschichtung auch bei höheren Temperaturen beständig sein soll.

Gelöst wird diese Aufgabe durch ein Verfahren zum Beschichten eines aus Magnesium oder dessen Legierungen hergestellten Bauteils an dessen Oberfläche, das dadurch weitergebildet wird, dass eine organische Polyoxazolhaltige Polymerlösung als Beschichtungslösung auf die Oberfläche aufgebracht wird, wobei das Polyoxazol in der Polymerlösung wenigstens einen konjugierten 5-gliedrigen heterozyklischen Ring mit zwei oder mehr Stickstoffatomen enthält, und in einem weiteren Schritt die aufgebrachte Polymerlösung getrocknet wird, so dass eine korrosionsbeständige Beschichtung auf der Oberfläche gebildet wird.

Die Erfindung beruht auf dem Gedanken, dass durch eine auf Polyoxazol basierende organische Beschichtung für Bauteile aus Magnesium eine korrosionsbeständige Beschichtung bzw. eine Korrosions-Beschichtung vorgesehen ist. Durch das vorgeschlagene Verfahren wird ein einfaches, d.h. weniger aufwändiges Beschichtungsverfahren vorgeschlagen, das außerdem preisgünstig ist. Die Bauteile sind vorzugsweise aus einem Magnesiumwerkstoff hergestellt, so dass durch die hergestellte bzw. aufgetragene Beschichtung ein polymerbasierter, chromfreier Korrosionsschutz für die Bauteile bzw. für Magnesium oder dessen Legierungen bereitgestellt wird. Bevorzugterweise enthält die Beschichtungslösung bzw. Polymerlösung fluorhaltige Polyoxazole, die in aprotischen organischen Lösungen löslich sind.

Erfindungsgemäß wird somit eine Korrosions-Beschichtung auf einer Magnesium-Oberfläche eines Bauteils bereitgestellt, wobei eine aprotische organische Polyoxazollösung auf die Oberfläche aufgebracht wird, in einem weiteren Schritt die aufgebrachte Polymerlösung getrocknet wird, so dass eine Beschichtung oder eine oder mehrere Beschichtungslagen auf der Oberfläche gebildet wird bzw. werden.

Hierzu ist vorgesehen, dass vor dem Aufbringen der organischen Polyoxazol-haltigen Polymerlösung auf die Oberfläche Polyoxazol-Polymere und/oder Polyoxazol-Copolymere in einer organischen, vorzugsweise aprotischen, Lösung gelöst werden, so dass eine Polymerlösung entsteht. Durch das Lösungsmittel in der Polymerlösung wird Korrosion an der Oberfläche von Magnesium- oder Magnesiumlegierungsoberflächen des Bauteils vermieden. Außerdem werden durch das aprotische Lösungsmittel Säure und protische Lösungsmittel vermieden.

Wenn zudem Polyoxadiazol in der Polymerlösung verwendet wird, wird eine geringe Wasserdurchlässigkeit der hergestellten Beschichtung auf der Oberfläche des Bauteils bzw. des Magnesiumwerkstoffs erreicht. Die vorgeschlagene erfindungsgemäße Polymerbeschichtung hat zudem den Vorteil, dass eine chromfreie Beschichtungszusammensetzung bzw. Beschichtung für metallische Oberflächen, insbesondere für Magnesium, und deren Legierungen vorgeschlagen wird.

Durch die chromfreie, korrosionsbeständige Beschichtungslösung mit Polyoxazol-Polymeren oder -Copolymeren wird die Beständigkeit der beschichteten Oberfläche gegen Lösungsmittel, Wasser, Feuchtigkeit sowie Kratzen, d.h. mechanische Beschädigungen, und Korrosion von metallischen Oberflächen und deren Legierungen deutlich verbessert.

Dazu ist weiter vorgesehen, dass in der Polymerlösung, vorzugsweise leitfähige oder nicht leitfähige, Füllstoffe bzw. Füller gelöst und/oder, vorzugsweise in-situ, erzeugt und/oder suspendiert werden oder sind. Dieser Verfahrensschritt wird insbesondere dann ausgeführt, wenn die Polymere oder Copolymere mit Polyoxazol im organischen Lösungsmittel gelöst sind.

Um einen dauerhaften Korrosionsschutz zu gewährleisten, wird in einer Ausgestaltung vorgeschlagen, dass die Oberfläche des Bauteils vor Aufbringen der Polymerlösung behandelt, insbesondere gereinigt, wird oder ist.

Weiterhin zeichnet sich das Verfahren durch den weiteren Verfahrensschritt aus, dass die auf der Oberfläche des Bauteils aufgebrachte oder aufgetragene Polymerlösung bzw. Beschichtung bei einer Temperatur von unter 100°C, vorzugsweise unter 80°C, getrocknet wird. Hierdurch wird die auf die Oberfläche des Bauteils bzw. des Magnesiumwerkstoffs aufgebrachte, gegossene Polymerlösung oder Suspension (mit Füllstoffen) zu einem Beschichtungsfilm auf der Oberfläche ausgebildet.

Darüber hinaus ist es vorteilhaft, wenn die Polyoxazol-haltige Polymerlösung Polyoxadiazole und/oder Polytriazole und/oder Poly(oxadiazole-co-triazole) und/oder Poly(hydrazid-co-oxadiazole) und/oder Poly(hydrazid-co-oxadiazole-co-triazole) und/oder Poly(ether sulfon-co-oxadiazole) und/oder Poly(ether ketone-co-oxadiazole) und/oder Poly(ether amide-co-oxadiazole) und/oder Poly(hydrazid-co-triazole) und/oder Poly(ether sulfon-co-triazole) und/oder Poly(ether keton-co-triazole) und/oder Poly(ether amide-co-triazole) aufweist.

Insbesondere weist das Polymer die folgende Struktur auf:

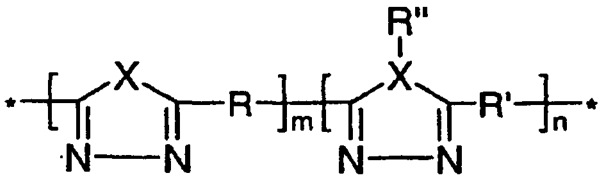

,

wobei X O oder N ist, R" H, ein Halogenatom oder eine organische Gruppe, R, R' eine organische Gruppe sein kann. Insbesondere ist es bevorzugt, wenn die organischen Gruppen für R, R' und/oder R" Polyoxazole sind, die Fluoratome aufweisen, um die Wasserabsorption herabzusetzen.

Das Polyoxazol in der Polymerlösung weist insbesondere wenigstens einen konjugierten 5-gliedrigen heterozyklischen Ring mit zwei oder mehr Stickstoffatomen auf, wobei insbesondere die Stickstoffatome im konjugierten Ring nebeneinander verbunden oder von anderen Atomen getrennt sind.

Vorzugsweise weist das Polymer die folgende Struktur auf:

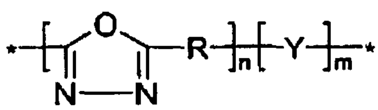

,

wobei R eine Gruppe mit 1 bis zu 40 Kohlenstoffatomen ist, die vorzugsweise Fluoratome enthält,

Y wenigstens eine oder mehrere Gruppen der folgenden Formeln ist:

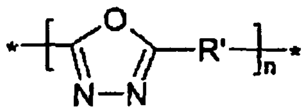

und/oder

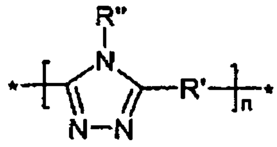

und/oder

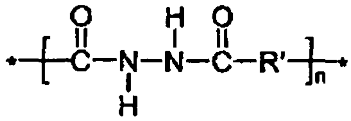

und/oder

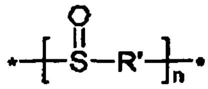

und/oder

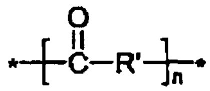

und/oder

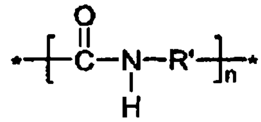

,

wobei R' eine Gruppe mit 1 bis zu 40 Kohlenstoffatomen ist, wobei R" ein Wasserstoffatom oder eine Gruppe mit 1 bis zu 40 Kohlenstoffatomen ist.

Die Polyoxazole können in Form von Blockcopolymeren (Diblock oder Triblock), in Form von statischen Copolymeren, periodischen Copolymeren und/oder alternierenden Copolymeren auftreten, wobei n und m natürliche Zahlen sind.

Außerdem ist es bevorzugt, wenn die Polymerlösung oder die Polymere wenigstens ein mit wenigstens einer Säuregruppe funktionalisiertes Polyoxazol aufweisen.

Gemäß einer weiteren Ausbildung weist die erfindungsgemäße Polymerlösung Oligomere oder Polymere auf, die aus der Gruppe von Polyaniline, Polypyrrole, Polythiophenen, Polyacryle, Polyether, Epoxy, Polyester, Polyethylene, Polyamide, Polyimide, Polypropylene, Polyurethane, Polyolefine, Polydiene, Hydroxy-Polymere, Polyanhydride, Polysiloxane, Polyhydrazide, Polysulfone, Polyvinyle sowie Mischungen der genannten Substanzen und/oder der daraus abgeleiteten Copolymere sind. Insbesondere sind oder werden gemäß einer Weiterbildung die Oligomere oder Polymere durch eine funktionelle oder mehrere funktionelle Säuregruppen funktionalisiert. Überdies ist es von Vorteil, wenn der Füllstoff oder die Füller, vorzugsweise funktionalisiertes, Siliziumdioxid und/oder ein, vorzugsweise funktionalisiertes, Produkt aus dem Sol-Gel-Prozess und/oder, vorzugsweise funktionalisiertes, Aluminium und/oder, vorzugsweise funktionalisiertes, Titan und/oder, vorzugsweise funktionalisiertes, Montmorillonit und/oder, vorzugsweise funktionalisiertes, Silikat ist.

Um die Wasserpermeabilität herabzusetzen, werden insbesondere nicht leitende Füllstoffe oder Füller in die Polymerlösung eingebracht. Allgemein wird die Permeabilität abnehmen, wenn der Volumenanteil der Füllstoffe bzw. der Füller in der Polymerlösung zunimmt. Gleichzeitig werden die thermischen und/oder mechanischen Eigenschaften der Beschichtung dadurch verbessert.

Besonders bevorzugt ist es, wenn der Füllstoff ein, vorzugsweise funktionalisiertes, Kohlenstoffnanoröhrchen und/oder, vorzugsweise molekular siebender, Kohlenstoff und/oder Graphit und/oder pyrolysierte Polyoxazole-Partikel ist. Hierdurch wird die Korrosionsbeständigkeit der Beschichtung auf der Oberfläche noch weiter verbessert.

Dazu ist es weiter von Vorteil, wenn der Anteil des Füllstoffs mehr als 0,5 Gew.-%, vorzugsweise mehr als 5 Gew.-%, insbesondere vorzugsweise mehr als 20 Gew.-%, in der Polymerlösung beträgt. Hierzu ist es bevorzugt, wenn die Partikel der Füllstoffe in der Polymerschicht bzw. Polymerlösung gut dispergiert sind, so dass eine gleichmäßige Beschichtung der Oberfläche erreicht wird. Um die Adhäsion der Beschichtungslösung bzw. der Beschichtung mit der metallischen Oberfläche des Bauteils zu erhöhen, ist es bevorzugt, wenn die Dicke der Beschichtung bzw. der aufgebrachten Beschichtungsschicht oder BEschichtungslage mindestens größer ist als 1 $\mu$m, vorzugsweise mehr als 10 $\mu$m, insbesondere mehr als 50 $\mu$m, beträgt.

Darüber hinaus wird die Aufgabe gelöst durch eine Beschichtung eines aus Magnesium oder dessen Legierungen hergestellten Bauteils, vorzugsweise eine korrosionsbeständige chromfreie Beschichtung, wobei eine Beschichtungslösung auf eine Oberfläche des Bauteils zum Beschichten der Oberfläche als Beschichtungslage oder -schicht aufgebracht ist oder wird, die dadurch weitergebildet ist, dass die Beschichtungslösung eine organische Polyoxazolhaltige Polymerlösung ist, wobei das Polyoxazol in der Polymerlösung wenigstens einen konjugierten 5-gliedrigen heterozyklischen Ring mit zwei oder mehr Stickstoffatomen enthält, und in einem weiteren Schritt die aufgebrachte Polymerlösung getrocknet wird, so dass eine korrosionsbeständige Beschichtung auf der Oberfläche ausgebildet ist.

Insbesondere ist oder wird die organische Polyoxazol-haltige Polymerlösung getrocknet, so dass eine Beschichtung auf der Oberfläche des Bauteils bzw. eines Magnesiumwerkstoffes gebildet wird oder ist. Vorteilhafterweise sind oder werden in der Polymerlösung Polyoxazol-Polymere und/oder Polyoxazol-Copolymere in einer organischen, vorzugsweise aprotischen, Lösung gelöst, so dass eine Polymerlösung entsteht oder erhalten wird. Hierzu ist es weiter günstig, wenn in der Polymerlösung, vorzugsweise leitfähige oder nichtleitfähige, Füllstoffe gelöst und/oder, vorzugsweise in-situ, erzeugt und/oder suspendiert werden oder sind.

Dazu ist weiter vorgesehen, dass die Oberfläche des Bauteils vor Aufbringen der Polymerlösung behandelt, insbesondere gereinigt, wird oder ist. Nach Aufgießen bzw. Aufbringen der Beschichtung auf der Oberfläche wird oder ist die auf der Oberfläche des Bauteils aufgebrachte Polymerlösung oder Beschichtung bei einer Temperatur von unter 100°C, vorzugsweise unter 80°C, getrocknet.

Weitere vorteilhafte Ausgestaltungen der Beschichtung ergeben sich aus den oben stehenden Ausführungen zum erfindungsgemäßen Verfahren, auf die ausdrücklich verwiesen wird.

Die Aufgabe wird ferner gelöst durch die Verwendung einer Beschichtungslösung zur Beschichtung eines aus Magnesium oder dessen Legierungen hergestellten Bauteils, wobei die Beschichtung des Bauteils wie voranstehend beschrieben ausgebildet bzw. zusammengesetzt ist. Zur Vermeidung von Wiederholungen wird auf die vorherigen Ausführungen ausdrücklich verwiesen.

Durch das erfindungsgemäße Verfahren und die erfindungsgemäße Beschichtung wird ein effektiver und kostengünstiger Korrosionsschutz für Bauteile und Komponenten aus Magnesiumwerkstoffen erreicht, wobei das Beschichtungsverfahren einfach und kostengünstig ist. Darüber hinaus hat die aufgebrachte Beschichtung auf einem Bauteil den Vorteil, dass die Beschichtung bzw. Beschichtungslagen oder Korrosionsbeschichtungsschichten beständig auch bei höheren Temperaturen ist, so dass die Herstellung einer Beschichtung vor einem Umformungsprozess, beispielsweise von Blechen, möglich ist, wobei weiterhin vor und während des Umformungsprozesses der Korrosionsschutz besteht.

Überdies wird es durch den Einbau von entsprechenden Reagenzien bzw. Stoffen möglich, ein Ausheilen der Beschichtung bei einer mechanischen Beschädigung zu begünstigen. Insbesondere wird ein fluorhaltiges Polymer bzw. eine fluorhaltige Polymerlösung (Beschichtungslösung) eingesetzt, das eine geringe Wasseraufnahme zur Folge hat.

Die Erfindung wird nachstehend ohne Beschränkung des allgemeinen Erfindungsgedankens anhand von Ausführungsbeispielen exemplarisch beschrieben, wobei hierdurch der Umfang bzw. die Anwendungsmöglichkeit der Erfindung nicht beschränkt wird. Es zeigen:

Fig. 1 ein elektrochemisches Impedanzspektrum einer unbe- schichteten Magnesiumlegierung;

Fig. 2 ein elektrochemisches Impedanzspektrum einer be- schichteten Magnesiumlegierung und

Fig. 3 Polarisationskurven für beschichtete und nicht be- schichtete Magnesiumlegierungen.

Beispiele

Beispiel 1 Polymersynthese

Poly(2,2-bis(4-phenyl)hexafluoropropan-1,3,4-oxadiazol) wurde synthetisiert, wie es beispielsweise in der Veröffentlichung Gomes et al., Polymer 42 (2001), 851-865 beschrieben worden ist. Hierbei wurde eine optimierte Polyoxadiazolsynthese ausgeführt. Nach Reaktion von 4,4'-Dicarboxyphenylhexafluorpropan (99 %, Aldrich) und Hydrazin-Sulfat (> 99 %, Aldrich) für 3 Stunden bei 160°C, wurde das Reaktionsmedium in Wasser mit einem Gehalt von 5 % Natriumhydroxid (99 %, Vetec) gegossen, um das Polymer abzuscheiden. Der pH-Wert dieser Polymersuspension wurde, wie in der Literatur (vgl. Gomes et al. Polymer 45 (2004), Seite 4997-5004) angegeben, kontrolliert.

Die chemische Struktur des Polymers ist nachfolgend dargestellt:

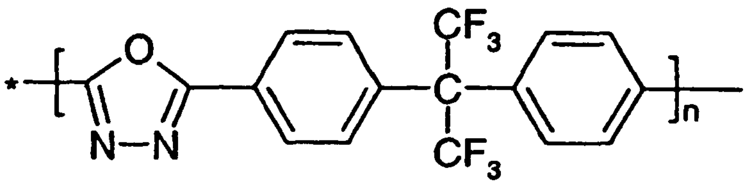

$C_{17}H_8N_2O_1D_6$ (370): berechnet (%) C 55,1, H 2,2, N 7,6; gefunden C 55,3, H 3,2, N 6,6.

Es wurde somit Polyoxodiazol mit einer Ausbeute von 89 % erreicht, das in den Lösungsmitteln NMP, DMSO, $CF_3COOH$, $CHCl_3$, THF mit einem durchschnittlichen molekularen Massengewicht entsprechend 200.000 g/mol, bestimmt durch SEC (Size Exclusion Chromatography), löslich ist.

Hierzu war ein Größenausschlusschromatograph (Size Exclusion Chromatography (SEC)) von Viscotek eingesetzt, der mit Eurogelsäulen SEC 10.000 und PSS Gram 100, 1.000, mit den Seriennummern HC286 und 1515161 und Größen von 8 x 300 mm ausgestattet war. Das SEC-Gerät von Viscotek wurde eingesetzt, um das durchschnittliche Molekulargewicht der Polymere zu ermitteln. Eine Eichung wurde unter Verwendung von Polystyren-Standards (Merck) mit durchschnittlichen Molekulargewichten zwischen 309 bis 944.000 g/mol durchgeführt. Eine Lösung mit 0,05 M Lithiumbromid in DMAc wurde als Träger verwendet.

Beispiel 2 Beschichtungen von Magnesium

Homogene Beschichtungen wurden durch Gießen der Polymerlösungen mit einer Konzentration von 4 Gew.-% in NMP nach einer Filterung auf eine Oberfläche einer AM50 Magnesiumlegierung präpariert und bei 60°C für eine Dauer von 24 Stunden getrocknet. Vor dem Auftrag der Polymerlösung und der Beschichtung wurden die Proben der Magnesiumlegierungen mit einem SiC mit einer Körnung bis zu 2.500 poliert, in destilliertem Wasser gewaschen und in Azeton mit Ultraschall gereinigt. Zur Entfernung des restlichen Lösungsmittels wurde das beschichtete Magnesium in einem Vakuumofen bei 80°C für eine Dauer von 24 Stunden eingebracht. Die endgültige Dicke der Polymerbeschichtung betrug ungefähr 10 μm.

Beispiel 3 Präparation des Films

Homogene Filme wurden von den Polymerlösungen mit einer Konzentration von 4 Gew.-% in NMP, wobei sie vorher gefiltert wurden, auf eine teflonbeschichtete Oberfläche bei 60°C gegossen. Die Filme wurden für 24 Stunden getrocknet und anschließend leicht von der Platte entfernt. Anschließend wurden die Filme in einem Vakuumofen bei 80°C für 24 Stunden getrocknet, um Rückstände des Lösungsmittels zu entfernen. Die endgültige Dicke der Filme betrug ungefähr 10 μm.

Messungen der Wasseraufnahme

Die Filme wurden bei 80°C über Nacht vor Durchführung der Messungen getrocknet. Nach der Messung der Gewichte der trockenen Filme wurden die Proben in eine 0,1 M NaCl-lösung für 66 Stunden bei Zimmertemperatur (21°C) eingetaucht. Vor der Messung der Gewichte der hydratisierten Filme wurde das Wasser von der Filmoberfläche durch Betupfen mit einem Papierhandtuch entfernt. Die Wasseraufnahme wurde gemäß der folgenden Gleichung berechnet:

$$\text{Wasseraufnahme (\%)} = \frac{(\text{Gewicht}_{\text{flüssig}} - \text{Gewicht}_{\text{trocken}})}{\text{Gewicht}_{\text{trocken}}} \times 100$$

Hierbei sind $\text{Gewicht}_{\text{trocken}}$ und $\text{Gewicht}_{\text{feucht}}$ die Gewichte der getrockneten und feuchten Proben.

Bei den POD6F-Filmen wurde nach 66 Stunden keine Aufnahme von Wasser beobachtet. Die chemische Bindung zwischen den Kohlenstoffatomen und den Fluoratomen hierbei ist sehr stark. Wenn Fluor Teil eines Moleküls ist, stößt es andere Moleküle wie z.B. Wasser ab, auch dann, wenn die anderen Moleküle FluorAtome enthalten.

Beispiel 4 Impedanzspektroskopie

Untersuchungen mit der elektrochemischen Impedanzspektroskopie (Electrochemical Impedance Spectroscopy (EIS)) wurden durchgeführt, nachdem die Proben für eine Dauer von 2 Stunden, 36 Stunden und 72 Stunden in einer 0,1 M NaCl-Lösung ausgesetzt waren. Die EIS-Experimente wurden durchgeführt in einem Frequenzbereich zwischen 0,001 Hz und 30 kHz, wobei ein Frequenzanalysator verwendet worden ist (Fabrikat Gill AC, ACM Instruments, Großbritannien).

In Fig. 1 und 2 sind die Kurven für die Impedanzspektroskopie für unbeschichtete Metallflächen bzw. Proben (Fig. 1) und für beschichtete Proben (Fig. 2) dargestellt.

Die mit Polyoxadiazol beschichteten Proben (Fig. 2) zeigen eine deutliche Verbesserung in der Korrosionsbeständigkeit als die unbehandelten Proben (Fig. 1). Die Korrosionsbeständigkeit von Polyoxadiazol überzogenen Proben ist ungefähr 5 Größenordnungen höher als die von blanken Metalloberflächen. Die Korrosionsbeständigkeit nimmt mit der Zeit für unbeschichtete Legierungen ab. Nach einem Eintauchbad von 36 Stunden beträgt der Polarisationswiderstand bei der unbeschichteten Probe 1,31 $10^3$ $\Omega$ $cm^2$, während für die beschichtete Magnesiumlegierungsprobe mit Polyoxadiazol der Beschichtungswiderstand nach 36 Stunden bei einem Wert von 8,0 $10^7$ $\Omega cm^2$ (Fig. 2) konstant gehalten wurde.

Beispiel 5 Elektrochemische Polarisation

Die Untersuchungen der elektrochemischen Polarisation wurden ausgeführt unter Verwendung eines computergesteuerten Potentiostat/Galvanostat und mit einer elektrochemischen Korrosionszelle mit Proben als Arbeitselektrode, Platzin-Gaze als Zählelektrode und einer Ag-AgCl Elektrode als Referenzelektrode. Die Experimente wurden in einer 0,1 M NaCl-Lösung bei einer Scan-Rate von 1 mV/s durchgeführt.

Die Polarisationskurven des blanken, d.h. unbeschichteten, Metalls und der beschichteten Proben (POD-6F) in 0,1 M NaCl sind in Fig. 3 dargestellt. Die Polyoxadiazol-beschichteten Proben zeigen eine signifikante Verbesserung in der Korrosionsbeständigkeit als das unbeschichtete Metall. Die Korrosionsstromdichte von Polyoxazolbeschichteten Proben hat von 5,6 x $10^{-3}$ mA / $cm^2$ auf 1,4 x $10^{-6}$ mA / $cm^2$ abgenommen.

Darüber hinaus zeigen die mit Polyoxazol beschichteten Proben keinen Zusammenbruch des Potentials sogar bei bis zu 1.000 mV über dem Korrosionspotential. Dies belegt die höhere Stabilität der Beschichtung von Proben in einer korrosiven Umgebung.

Die Korrosionsbeständigkeit der Polymerschichten auf einer Oberfläche wurden durch elektrochemische Imdepdanzspektroskopiemessungen (EIS) und Polarisationsuntersuchungen in einer 0,1 M NaCl-Lösung durchgeführt. Die Polarisationsuntersuchungen sind als Aufnahmen von potentio- bzw. galvano-statischen Spannungs-Stromdichte-Kurven dargestellt. Sowohl die Ergebnisse der EIS-Untersuchungen, die in so genannte Bode-Diagrammen als Logarithmus des Impedanzbetrages |Z| über dem Logarithmus der Frequenz aufgetragen sind (vgl. Fig. 1 und 2) als auch die aufgenommenen Spannungs-Stromdichte-Kurven (Fig. 3) zeigen eine signifikante Verbesserung der Korrosionsbeständigkeit der erfindungsgemäß beschichteten Magnesiumsubstrate.

## Patentansprüche

1. Verfahren zum Beschichten eines aus Magnesium oder dessen Legierungen hergestellten Bauteils an dessen Oberfläche, **dadurch gekennzeichnet, dass** eine organische Polyoxazol-haltige Polymerlösung auf die Oberfläche aufgebracht wird, wobei das Polyoxazol in der Polymerlösung wenigstens einen konjugierten 5-gliedrigen heterozyklischen Ring mit zwei oder mehr Stickstoffatomen enthält, und in einem weiteren Schritt die aufgebrachte Polymerlösung getrocknet wird, so dass eine korrosionsbeständige Beschichtung auf der Oberfläche gebildet wird.

2. Verfahren nach Anspruch 1, **dadurch gekennzeichnet, dass** vor dem Aufbringen der organischen Polyoxazol-haltigen Polymerlösung auf die Oberfläche Polyoxazol-Polymere und/oder Polyoxazol-Copolymere in einer organischen, vorzugsweise aprotischen, Lösung gelöst werden, so dass eine Polymerlösung entsteht.

3. Verfahren nach Anspruch 2, **dadurch gekennzeichnet, dass** in der Polymerlösung, vorzugsweise leitfähige oder nichtleitfähige, Füllstoffe gelöst und/oder, vorzugsweise in-situ, erzeugt und/oder suspendiert werden oder sind.

4. Verfahren nach einem der Ansprüche 1 bis 3, **dadurch gekennzeichnet, dass** die Oberfläche des Bauteils vor Aufbringen der Polymerlösung behandelt, insbesondere gereinigt, wird oder ist.

5. Verfahren nach einem der Ansprüche 1 bis 4, **dadurch gekennzeichnet, dass** die auf der Oberfläche des Bauteils

aufgebrachte Polymerlösung bei einer Temperatur von unter 100°C, vorzugsweise unter 80°C, getrocknet wird.

6. Verfahren nach einem der Ansprüche 1 bis 5, **dadurch gekennzeichnet, dass** die Stickstoffatome im konjugierten Ring des Polyoxazols nebeneinander verbunden oder von anderen Atomen getrennt sind.

7. Verfahren nach einem der Ansprüche 1 bis 6, **dadurch gekennzeichnet, dass** das Polymer die folgende Struktur aufweist:

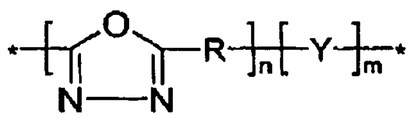

,

wobei R eine Gruppe mit 1 bis zu 40 Kohlenstoffatomen ist, die vorzugsweise die Fluoratome enthält,
Y wenigstens eine oder mehrere Gruppen der folgenden Formeln ist:

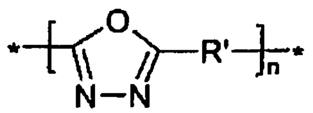

und/oder

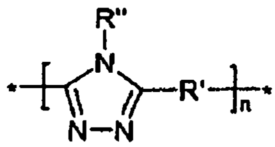

und/oder

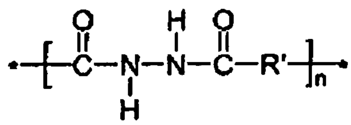

und/oder

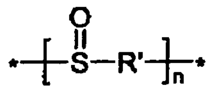

und/oder

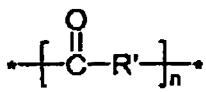

und/oder

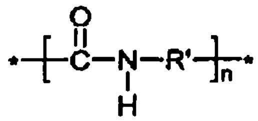

,

wobei R' eine Gruppe mit 1 bis zu 40 Kohlenstoffatomen ist, wobei R" ein Wasserstoffatom oder eine Gruppe mit 1 bis zu 40 Kohlenstoffatomen ist.

8. Verfahren nach einem der Ansprüche 1 bis 7, **dadurch gekennzeichnet, dass** die Polyoxazol-haltige Polymerlösung Polyoxadiazole und/oder Polytriazole und/oder Poly(oxadiazole-co-triazole) und/oder Poly(hydrazid-co-oxadiazole) und/oder Poly(hydrazid-co-oxadiazole-co-triazole) und/oder Poly(ether sulfon-co-oxadiazole) und/oder Poly(ether ketone-co-oxadiazole) und/oder Poly(ether amide-co-oxadiazole) und/oder Poly(hydrazid-co-triazole) und/oder Poly(ether sulfon-co-triazole) und/oder Poly(ether keton-co-triazole) und/oder Poly-(ether amide-co-triazole) aufweist.

9. Verfahren nach einem der Ansprüche 1 bis 8, **dadurch gekennzeichnet, dass** die Polymerlösung oder die Polymere wenigstens ein mit wenigstens einer Säuregruppe funktionalisiertes Polyoxazol aufweisen.

10. Verfahren nach einem der Ansprüche 1 bis 9, **dadurch gekennzeichnet, dass** die Polymerlösung Oligomere oder Polymere aufweist, die aus der Gruppe der Polyaniline, Polypyrrole, Polythiophenen, Polyacryle, Polyether, Epoxy, Polyester, Polyethylene, Polyamide, Polyimide, Polypropylene, Polyurethane, Polyolefine, Polydiene, Hydroxy-Polymere, Polyanhydride, Polysiloxane, Polyhydrazide, Polysulfone, Polyvinyle sowie Mischungen der genannten Substanzen und/oder der daraus abgeleiteten Copolymere sind.

**11.** Verfahren nach Anspruch 10, **dadurch gekennzeichnet, dass** die Oligomere oder Polymere durch eine funktionelle oder mehrere Säuregruppen funktionalisiert sind oder werden.

**12.** Verfahren nach einem der Ansprüche 1 bis 11, **dadurch gekennzeichnet, dass** der Füllstoff, vorzugsweise funktionalisiertes, Siliziumdioxid und/oder ein, vorzugsweise funktionalisiertes, Produkt aus dem Sol-Gel-Prozess und/oder, vorzugsweise funktionalisiertes, Aluminium und/oder, vorzugsweise funktionalisiertes, Titan und/oder, vorzugsweise funktionalisiertes, Montmorillonit und/oder, vorzugsweise funktionalisiertes, Silikat ist.

**13.** Verfahren nach einem der Ansprüche 1 bis 12, **dadurch gekennzeichnet, dass** der Füllstoff ein, vorzugsweise funktionalisiertes, Kohlenstoffnanoröhrchen und/oder, vorzugsweise molekular siebender, Kohlenstoff und/oder Graphit und/oder pyrolysierte Polyoxazole-Partikel ist.

**14.** Verfahren nach einem der Ansprüche 1 bis 13, **dadurch gekennzeichnet, dass** der Anteil des Füllstoffs mehr als 0,5 Gew.-%, vorzugsweise mehr als 5 Gew.-%, insbesondere vorzugsweise mehr als 20 Gew.-%, in der Polymerlösung beträgt.

**15.** Verfahren nach einem der Ansprüche 1 bis 14, **dadurch gekennzeichnet, dass** die Dicke der Beschichtung mindestens größer ist als 1 μm, vorzugsweise mehr als 10 μm, insbesondere mehr als 50 μm, beträgt.

**16.** Beschichtung eines aus Magnesium oder dessen Legierungen hergestellten Bauteils, wobei eine Beschichtungslösung auf eine Oberfläche des Bauteils zum Beschichten der Oberfläche aufgebracht ist oder wird, **dadurch gekennzeichnet, dass** die Beschichtungslösung eine organische Polyoxazol-haltige Polymerlösung ist, wobei das Polyoxazol in der Polymerlösung wenigstens einen konjugierten 5-gliedrigen heterozyklischen Ring mit zwei oder mehr Stickstoffatomen enthält, so dass eine korrosionsbeständige Beschichtung auf der Oberfläche ausgebildet ist.

**17.** Beschichtung nach Anspruch 16, **dadurch gekennzeichnet, dass** die organische Polyoxazol-haltige Polymerlösung getrocknet wird oder ist, so dass eine Beschichtung auf der Oberfläche gebildet wird oder ist.

**18.** Beschichtung nach Anspruch 16 oder 17, **dadurch gekennzeichnet, dass** in der Polymerlösung Polyoxazol-Polymere und/oder Polyoxazol-Copolymere in einer organischen, vorzugsweise aprotischen, Lösung gelöst sind oder werden, so dass eine Polymerlösung entsteht.

**19.** Beschichtung nach einem der Ansprüche 16 bis 18, **dadurch gekennzeichnet, dass** in der Polymerlösung, vorzugsweise leitfähige oder nichtleitfähige, Füllstoffe gelöst und/oder, vorzugsweise in-situ, erzeugt und/oder suspendiert werden oder sind.

**20.** Beschichtung nach einem der Ansprüche 16 bis 19, **dadurch gekennzeichnet, dass** die Oberfläche des Bauteils vor Aufbringen der Polymerlösung behandelt, insbesondere gereinigt, wird oder ist.

**21.** Beschichtung nach einem der Ansprüche 16 bis 20, **dadurch gekennzeichnet, dass** die auf der Oberfläche des Bauteils aufgebrachte Polymerlösung bei einer Temperatur von unter 100°C, vorzugsweise unter 80°C, getrocknet wird oder ist.

**22.** Beschichtung nach einem der Ansprüche 16 bis 20, **dadurch gekennzeichnet, dass** die Polyoxazol-haltige Polymerlösung Polyoxadiazole und/oder Polytriazole und/oder Poly(oxadiazole-co-triazole) und/oder Poly(hydrazid-co-oxadiazole) und/oder Poly(hydrazid-co-oxadiazole-co-triazole) und/oder Poly(ether sulfon-co-oxadiazole) und/oder Poly(ether ketone-co-oxadiazole) und/oder Poly(ether amide-co-oxadiazole) und/oder Poly(hydrazid-co-triazole) und/oder Poly(ether sulfon-co-triazole) und/oder Poly(ether keton-co-triazole) und/oder Poly(ether amide-co-triazole) aufweist.

**23.** Beschichtung nach einem der Ansprüche 16 bis 22, **dadurch gekennzeichnet, dass** die Polymerlösung oder die Polymere wenigstens ein mit wenigstens einer Säuregruppe funktionalisiertes Polyoxazol aufweisen.

**24.** Beschichtung nach einem der Ansprüche 16 bis 23, **dadurch gekennzeichnet, dass** die Polymerlösung Oligomere oder Polymere aufweist, die aus der Gruppe der Polyaniline, Polypyrrole, Polythiophenen, Polyacryle, Polyether, Epoxy, Polyester, Polyethylene, Polyamide, Polyimide, Polypropylene, Polyurethane, Polyolefine, Polydiene, Hydroxy-Polymere, Polyanhydride, Polysiloxane, Polyhydrazide, Polysulfone, Polyvinyle sowie Mischungen der genannten Substanzen und/oder der daraus abgeleiteten Copolymere sind.

**25.** Beschichtung nach Anspruch 24, **dadurch gekennzeichnet, dass** die Oligomere oder Polymere durch eine oder mehrere funktionelle Säuregruppen funktionalisiert sind oder werden.

**26.** Beschichtung nach einem der Ansprüche 16 bis 25, **dadurch gekennzeichnet, dass** der Füllstoff, vorzugsweise funktionalisiertes, Siliziumdioxid und/oder ein, vorzugsweise funktionalisiertes, Produkt aus dem Sol-Gel-Prozess und/oder, vorzugsweise funktionalisiertes, Aluminium und/oder, vorzugsweise funktionalisiertes, Titan und/oder, vorzugsweise funktionalisiertes, Montmorillonit und/oder, vorzugsweise funktionalisiertes, Silikat ist.

**27.** Beschichtung nach einem der Ansprüche 16 bis 26, **dadurch gekennzeichnet, dass** der Füllstoff ein, vorzugsweise funktionalisiertes, Kohlenstoffnanoröhrchen und/oder, vorzugsweise molekular siebender, Kohlenstoff und/oder Graphit und/oder pyrolysierte Polyoxazole-Partikel ist.

**28.** Beschichtung nach einem der Ansprüche 16 bis 27, **dadurch gekennzeichnet, dass** der Anteil des Füllstoffs mehr als 0,5 Gew.-%, vorzugsweise mehr als 5 Gew.-%, insbesondere vorzugsweise mehr als 20 Gew.-%, in der Polymerlösung beträgt.

**29.** Beschichtung nach einem der Ansprüche 16 bis 28, **dadurch gekennzeichnet, dass** die Dicke der Beschichtung mindestens größer ist als 1 μm, vorzugsweise mehr als 10 μm, insbesondere mehr als 50 μm, beträgt.

**30.** Verwendung einer Beschichtungslösung zur Beschichtung eines aus Magnesium oder dessen Legierungen hergestellten Bauteils, wobei die Beschichtung des Bauteils nach einem der Ansprüche 16 bis 29 ausgebildet ist.

## Claims

**1.** A method of coating the surface of a component made of magnesium or alloys thereof, **characterised in that** an organic polymer solution containing polyoxazole is applied to the surface, wherein the polyoxazole in the polymer solution includes at least one conjugated 5-membered heterocyclic ring with two or more nitrogen atoms, and the applied polymer solution is dried in a further step so that a corrosion-resistant coating is formed on the surface.

**2.** A method as claimed in claim 1, **characterised in that** before applying the organic polymer solution containing polyoxazole to the surface polyoxazole polymers, and/or polyoxazole copolymers are dissolved in an organic, preferably aprotic, solution so that a polymer solution is produced.

**3.** A method as claimed in claim 2, **characterised in that** preferably conductive or non-conductive fillers are dissolved and/or produced, preferably in situ, and/or suspended.

**4.** A method as claimed in one of claims 1 to 3, **characterised in that** before the application of the polymer solution, the surface of the component is treated, particularly cleaned.

**5.** A method as claimed in one of claims 1 to 4, **characterised in that** the polymer solution applied to the surface of the component is dried at a temperature of less than 100°C, preferably less than 80 °C.

**6.** A method as claimed in one of claims 1 to 5, **characterised in that** the nitrogen atoms in the conjugated ring of the poloxazole are bonded next to one another or are separated by other atoms.

**7.** A method as claimed in one of claims 1 to 6, **characterised in that** the polymer has the following structure:

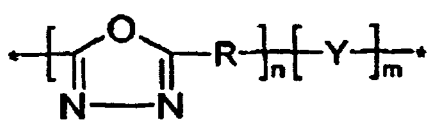

wherein R is a group with 1 to 40 carbon atoms, which preferably includes the fluorine atoms,
Y is at least one or more groups of the following formulae:

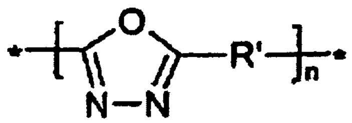

and/or

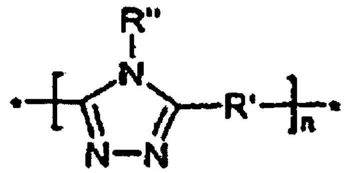

and/or

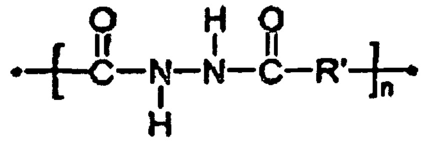

and/or

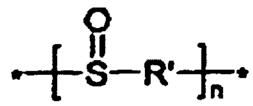

and/or

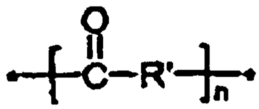

and/or

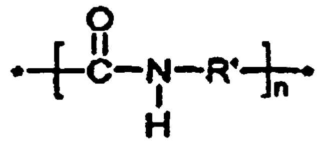

wherein R' is a group with 1 to 40 carbon atoms, wherein R" is a hydrogen atom or a group with 1 to 40 carbon atoms.

8. A method as claimed in one of claims 1 to 7, **characterised in that** the polyoxazole-containing polymer solution includes polyoxadiazole and/or polytriazole and/or poly(oxadiazole-co-triazole) and/or poly(hydrazide-co-oxadiazole) and/or poly(hydrazide-co-oxadiazole-co-triazole) and/or poly(ether sulfone-co-oxadiazole) and/or poly(ether ketone-co-oxadiazole) and/or poly(ether amide-co-oxadiazole) and/or poly(hydrozide-co-triazole) and/or poly(ether sulphone-co-triazole) and/or poly(ether ketone-co-triazole) and/or poly(ether amide-co-triazole).

9. A method as claimed in one of claims 1 to 8, **characterised in that** the polymer solution or the polymers include at least one polyoxazole functionalised with at least one acid group.

10. A method as claimed in one of claims 1 to 9, **characterised in that** the polymer solution includes oligomers or polymers, which are from the group of polyanilines, polypyrroles, polythiophines, polyacryls, polyethers, epoxy, polyesters, polyethylenes, polyamides, polyimides, polypropylenes, polyurethanes, polyolefins, polydienes, hydroxy-polymers, polyanhydrides, polysiloxanes, polyhydrazides, polysulfones, polyvinyls and mixtures of the aforementioned substances and/or copolymers derived therefrom.

11. A method as claimed in claim 10, **characterised in that** the oligomers or polymers are functionalised by one or more functional acid groups.

12. A method as claimed in one of claims 1 to 11, **characterised in that** the filler is, preferably functionalised, silicon dioxide and/or a, preferably functionalised, product of the sol-gel process and/or, preferably functionalised, aluminium and/or, preferably functionalised, titanium and/or, preferably functionalised, montmorillonite and/or, preferably functionalised, silicate.

13. A method as claimed in one of claims 1 to 12, **characterised in that** the filler is a, preferably functionalised, carbon nanotube and/or, preferably molecular sieving, carbon and/or graphite and/or pyrolised polyoxazole particles.

14. A method as claimed in one of claims 1 to 13, **characterised in that** the proportion of the filler is more than 0.5 wt. %, preferably more than 5 wt.%, particularly preferably more than 20 wt.% in the polymer solution.

**15.** A method as claimed in one of claims 1 to 14, **characterised in that** the thickness of the coating is at least greater than 1μm, preferably more than 10μm, particularly more than 50μm.

**16.** A coating of a component made from magnesium or alloys thereof, wherein a coating solution is applied to a surface of the component for coating the surface, **characterised in that** the coating solution is an organic polymer solution containing polyoxazole, wherein the polyoxazole in the polymer solution includes at least one conjugated 5-membered heterocyclic ring with two or more nitrogen atoms so that a corrosion-resistant coating is formed on the surface.

**17.** A coating as claimed in claim 16, **characterised in that** the organic polyoxazole-containing polymer solution is dry or dried so that a coating is formed on the surface.

**18.** A coating as claimed in claim 16 or 17, **characterised in that** in the polymer solution polyoxazole polymers and/or polyoxazole copolymers are dissolved in an organic, preferably aprotic, solution so that a polymer solution is produced.

**19.** A coating as claimed in one of claims 16 to 18, **characterised in that** preferably conductive or non-conductive fillers are dissolved and/or produced, preferably in situ, and/or suspended in the polymer solution.

**20.** A coating as claimed in one of claims 16 to 19, **characterised in that** before the application of the polymer solution the surface of the component is treated, preferably cleaned.

**21.** A coating as claimed in one of claims 16 to 20, **characterised in that** the polymer solution applied to the surface of the component is dried at a temperature of less than 100°C, preferably less than 80°C.

**22.** A coating as claimed as claimed in one of claims 16 to 20, **characterised in that** the polyoxazole-containing polymer solution includes polyoxadiazole and/or polytriazole and/or poly(oxadiazole-co-triazole) and/or poly(hydrazide-co-oxadiazole) and/or poly(hydrazide-co-oxadiazole-co-triazole) and/or poly(ether sulfone-co-oxadiazole) and/or poly (ether ketone-co-oxadiazole) and/or poly(ether amide-co-oxadiazole) and/or poly(hydrozide-co-triazole) and/or poly (ether sulphone-co-triazole) and/or poly(ether ketone-co-triazole) and/or poly(ether amide-co-triazole).

**23.** A coating as claimed in one of claims 16 to 22, **characterised in that** the polymer solution or the polymers include at least one polyoxazole functionalised with at least one acid group.

**24.** A coating as claimed in one of claims 16 to 23, **characterised in that** the polymer solution includes oligomers or polymers, which are from the group of polyanilines, polypyrroles, polythiophines, polyacryls, polyethers, epoxy, polyesters, polyethylenes, polyamides, polyimides, polypropylenes, polyurethanes, polyolefins, polydienes, hydroxy-polymers, polyanhydrides, polysiloxanes, polyhydrazides, polysulfones, polyvinyls and mixtures of the aforementioned substances and/or copolymers derived therefrom.

**25.** A coating as claimed in claim 24, **characterised in that** the oligomers or polymers are functionalised by one or more functional acid groups.

**26.** A coating as claimed in one of claims 16 to 25, **characterised in that** the filler is, preferably functionalised, silicon dioxide and/or a, preferably functionalised, product of the sol-gel process and/or, preferably functionalised, aluminium and/or, preferably functionalised titanium and/or, preferably functionalised, montmorillonite and/or, preferably functionalised, silicate.

**27.** A coating as claimed in one of claims 16 to 26, **characterised in that** the filler is a, preferably functionalised, carbon nanotube and/or, preferably molecular sieving, carbon and/or graphite and/or pyrolised polyoxazole particles.

**28.** A coating as claimed in one of claims 16 to 27, **characterised in that** the proportion of the filler is more than 0.5 wt.%, preferably more than 5 wt.%, particularly preferably more than 20 wt.% in the polymer solution.

**29.** A coating as claimed in one of claims 16 to 28, **characterised in that** the thickness of the coating is at least greater than 1μm, preferably more than 10μm, particularly more than 50μm.

**30.** Use of a coating solution for coating a component made of magnesium or alloys thereof, wherein the coating of the component is formed in accordance with one of claims 16 to 29.

## Revendications

1. Procédé de revêtement à sa surface d'une pièce en magnésium ou en ses alliages, **caractérisé en ce qu'**une solution organique de polymère contenant du polyoxazole est appliquée sur la surface, le polyoxazole dans la solution de polymère contenant au moins un hétérocycle conjugué à 5 éléments avec deux ou plusieurs atome d'azote, et **en ce que**, dans une étape ultérieure, la solution de polymère est séchée, de telle sorte qu'un revêtement résistant à corrosion est formé à la surface.

2. Procédé selon la revendication 1, **caractérisé en ce qu'**avant l'application de la solution organique de polymère contenant du polyoxazole sur la surface, des polymères de polyoxazole et/ou des copolymères de polyoxazole sont dissous dans une solution organique, de préférence aprotique, de telle sorte que l'on obtienne une solution de polymère.

3. Procédé selon la revendication 2, **caractérisé en ce que** dans la solution de polymère, des charges, de préférence conductrices ou non conductrices, sont ou se trouvent dissoutes et/ou sont ou se trouvent générées, de préférence in-situ, et/ou suspendues.

4. Procédé selon l'une quelconque des revendications 1 à 3, **caractérisé en ce qu'**avant l'application de la solution de polymère, la surface de la pièce est ou se trouve traitée, en particulier nettoyée.

5. Procédé selon l'une quelconque des revendications 1 à 4, **caractérisé en ce que** la solution appliquée sur la surface de la pièce est séchée à une température de moins de 100°C, de préférence de moins de 80 °C.

6. Procédé selon l'une quelconque des revendications 1 à 5, **caractérisé en ce que** dans le cycle conjugué du polyoxazole, les atomes d'azote sont liés ensemble à côté les uns des autres ou séparés par d'autres atomes.

7. Procédé selon l'une quelconque des revendications 1 à 6, **caractérisé en ce que** le polymère présente la structure suivante :

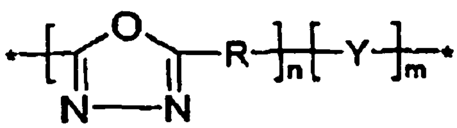

dans laquelle R est un groupe comprenant 1 à 40 atomes de carbone, qui contient de préférence les atomes de fluor,
Y est au moins un ou plusieurs groupes des formules suivantes :

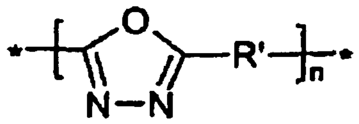

et/ou

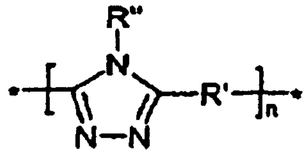

et/ou

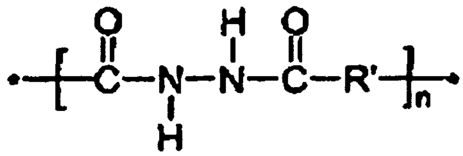

et/ou

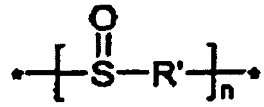

et/ou

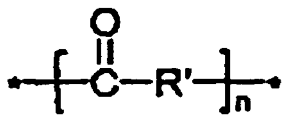

et/ou

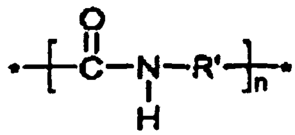

dans lesquelles R' est un groupe comptant 1 à 40 atomes de carbone dans lesquelles R" est un atome d'hydrogène ou un groupe comptant 1 à 40 atomes de carbone.

**8.** Procédé selon l'une quelconque des revendications 1 à 7, **caractérisé en ce que** la solution de polymère contenant du polyoxazole comporte des polyoxadiazoles et/ou des polytriazole et/ou des poly(oxadiazoles-co-triazoles) et/ou des poly(hydrazide-co-oxadiazoles) et/ou des poly(hydrazide-co-oxadiazoles-co-triazoles) et/ou des poly(éther sulfones-co-oxadiazoles) et/ou des poly(éther cétones-co-oxadiazoles) et/ou des poly(éther amides-co-oxadiazoles) et/ou des poly(hydrazides-co-triazoles) et/ou des poly(éther sulfones-co-triazoles) et/ou des poly(éther cétones-co-triazoles) et/ou des poly(éther amides-co-triazoles).

**9.** Procédé selon l'une quelconque des revendications 1 à 8, **caractérisé en ce que** la solution de polymère ou les polymères comportent au moins un polyoxazole fonctionnalisé par au moins un groupe acide.

**10.** Procédé selon l'une quelconque des revendications 1 à 9, **caractérisé en ce que** la solution de polymère comprend des oligomères ou des polymères qui sont du groupe des polyanilines, des polypyrroles, des polythiophènes, des polyacryles, des polyéthers, des époxydes, des polyesters, des polyéthylènes, des polyamides, des polyimides, des polypropylènes, des polyuréthanes, des polyoléfines, des polydiènes, des polymères hydroxylés, des polyanhydrides, des polysiloxanes, des polyhydrazides, des polysulfones, des polyvinyles ainsi que des mélanges des substances susmentionnées et/ou des copolymères qui en sont dérivés.

**11.** Procédé selon la revendication 10, **caractérisé en ce que** les oligomères ou les polymères sont ou se trouvent fonctionnalisés par un ou par plusieurs groupes acides fonctionnels.

**12.** Procédé selon l'une quelconque des revendications 1 à 11, **caractérisé en ce que** la charge est du dioxyde de silicium, de préférence fonctionnalisé, et/ou un produit du processus sol-gel, de préférence fonctionnalisé, et/ou de l'aluminium, de préférence fonctionnalisé, et/ou du titane, de préférence fonctionnalisé, et/ou de la montmorillonite, de préférence fonctionnalisée, et/ou un silicate, de préférence fonctionnalisé.

**13.** Procédé selon l'une quelconque des revendications 1 à 12, **caractérisé en ce que** la charge est un nanotube de carbone, de préférence fonctionnalisé, et/ou un carbone et/ou un graphite, de préférence à effet de tamis moléculaire, et/ou des particules de polyoxazole pyrolysées.

**14.** Procédé selon l'une quelconque des revendications 1 à 13, **caractérisé en ce que** la quote-part de la charge est de plus de 0,5 % en poids, de préférence de plus de 5 % en poids, en particulier de préférence de plus de 20 % en poids.

**15.** Procédé selon l'une quelconque des revendications 1 à 14, **caractérisé en ce que** l'épaisseur du revêtement est au moins supérieure à 1 µm, de préférence supérieure à 10 µm, en particulier supérieure à 50 µm.

16. Revêtement d'une pièce en magnésium ou en ses alliages, une solution de revêtement étant ou se trouvant appliquée sur une surface de la pièce pour revêtir la pièce, **caractérisé en ce que** la solution de revêtement est une solution organique contenant du polyoxazole, le polyoxazole dans la solution de polymère contenant au moins un hétérocycle conjugué à 5 éléments avec deux atomes d'azote ou plus, de telle sorte qu'un revêtement résistant à la corrosion est formé sur la surface.

17. Revêtement selon la revendication 16, **caractérisé en ce que** la solution organique contenant du polyoxazole est ou se trouve séchée, de telle sorte qu'un revêtement se forme ou est formé sur la surface.

18. Revêtement selon la revendication 16 ou 17, **caractérisé en ce que** dans la solution de polymère, des polymères de polyoxazole et/ou des copolymères de polyoxazole sont ou se trouvent dissous dans une solution organique, de préférence aprotique, de telle sorte qu'il en résulte une solution de polymère.

19. Revêtement selon l'une quelconque des revendications 16 à 18, **caractérisé en ce que** dans la solution de polymère, des charges, de préférence conductrices ou non conductrices, sont ou se trouvent dissoutes et/ou sont ou se trouvent générées, de préférence in situ, et/ou mises en suspension.

20. Revêtement selon l'une quelconque des revendications 16 à 19, **caractérisé en ce qu'**avant l'application de la solution de polymère, la surface de la pièce est ou se trouve traitée, en particulier nettoyée.

21. Revêtement selon l'une quelconque des revendications 16 à 20, **caractérisé en ce que** la solution appliquée sur la surface de la pièce est ou se trouve séchée à une température de moins de 100°C, de préférence de moins de 80 °C.

22. Revêtement selon l'une quelconque des revendications 16 à 20, **caractérisé en ce que** la solution de polymère contenant du polyoxazole comporte des polyoxadiazoles et/ou des polytriazole et/ou des poly(oxadiazoles-co-triazoles) et/ou des poly(hydrazide-co-oxadiazoles) et/ou des poly(hydrazide-co-oxadiazoles-co-triazoles) et/ou des poly(éther sulfones-co-oxadiazoles) et/ou des poly(éther cétones-co-oxadiazoles) et/ou des poly(éther amides-co-oxadiazoles) et/ou des poly(hydrazides-co-triazoles) et/ou des poly(éther sulfones-co-triazoles) et/ou des poly(éther cétones-co-triazoles) et/ou des poly(éther amides-co-triazoles).

23. Revêtement selon l'une quelconque des revendications 16 à 22, **caractérisé en ce que** la solution de polymère ou les polymères comportent au moins un polyoxazole fonctionnalisé par au moins un groupe acide.

24. Revêtement selon l'une quelconque des revendications 16 à 23, **caractérisé en ce que** la solution de polymère comprend des oligomères ou des polymères qui sont du groupe des polyanilines, des polypyrroles, des polythiophènes, des polyacryles, des polyéthers, des époxydes, des polyesters, des polyéthylènes, des polyamides, des polyimides, des polypropylènes, des polyuréthanes, des polyoléfines, des polydiènes, des polymères hydroxylés, des polyanhydrides, des polysiloxanes, des polyhydrazides, des polysulfones, des polyvinyles ainsi que des mélanges des substances susmentionnées et/ou des copolymères qui en sont dérivés.

25. Revêtement selon la revendication 24, **caractérisé en ce que** les oligomères ou les polymères sont ou se trouvent fonctionnalisés par un ou par plusieurs groupes fonctionnels acides.

26. Revêtement selon l'une quelconque des revendications 16 à 25, **caractérisé en ce que** la charge est du dioxyde de silicium, de préférence fonctionnalisé, et/ou un produit du processus sol-gel, de préférence fonctionnalisé, et/ou de l'aluminium, de préférence fonctionnalisé, et/ou du titane, de préférence fonctionnalisé, et/ou de la montmorillonite, de préférence fonctionnalisée, et/ou un silicate, de préférence fonctionnalisé.

27. Revêtement selon l'une quelconque des revendications 16 à 26, **caractérisé en ce que** la charge est un nanotube de carbone, de préférence fonctionnalisé et/ou un carbone et/ou un graphite, de préférence à effet de tamis moléculaire et/ou des particules de polyoxazole pyrolysées.

28. Revêtement selon l'une quelconque des revendications 16 à 27, **caractérisé en ce que** la quote-part de la charge est de plus de 0,5 % en poids, de préférence de plus de 5 % en poids, en particulier de préférence de plus de 20 % en poids.

29. Revêtement selon l'une quelconque des revendications 16 à 28, **caractérisé en ce que** l'épaisseur du revêtement est au moins supérieure à 1 $\mu$m, de préférence supérieure à 10 $\mu$m, en particulier supérieure à 50 $\mu$m.

**30.** Utilisation d'une solution de revêtement pour le revêtement d'une pièce fabriquée en magnésium ou en ses alliages, le revêtement de la pièce étant configuré selon une quelconque des revendications 16 à 29.

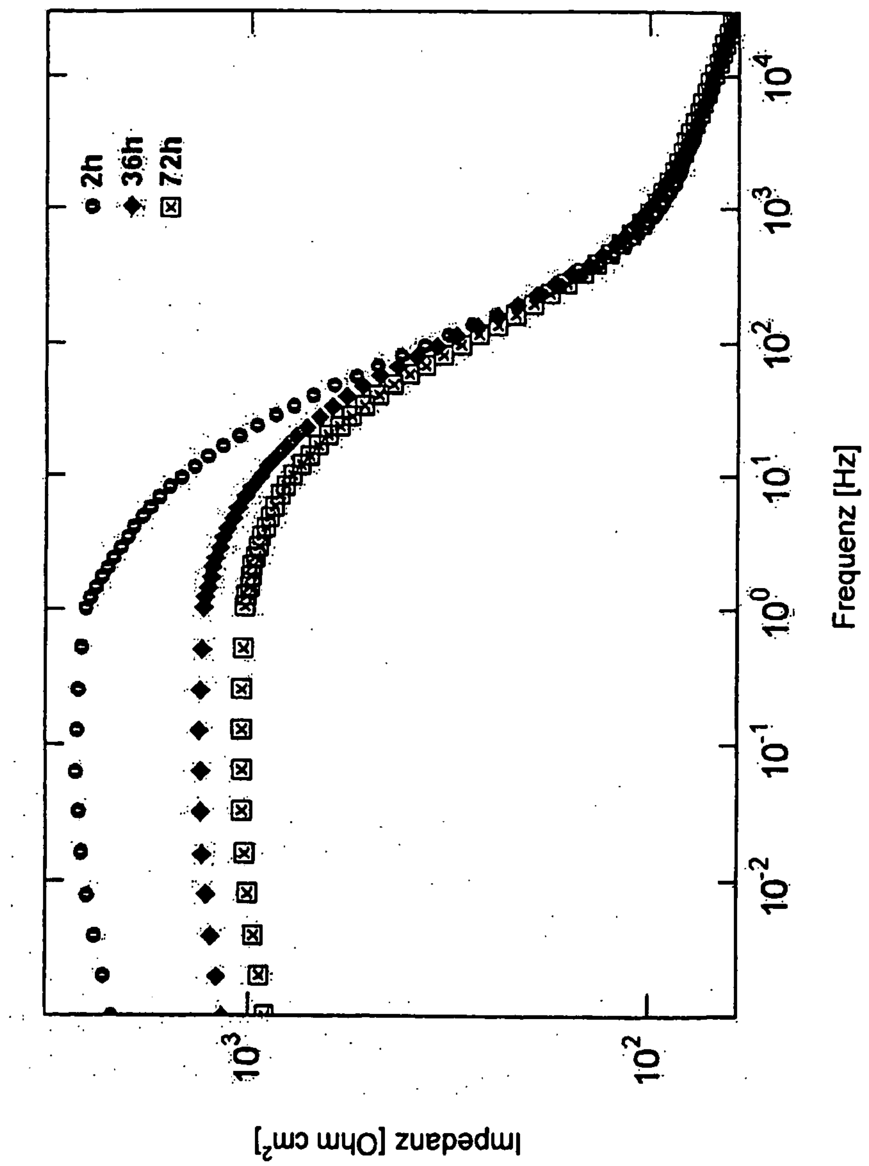
2h
36h
72h
Frequenz [Hz]
Impedanz [Ohm cm2]
10-2
10-1
100
101
102
103
104
103
102

Figur 1

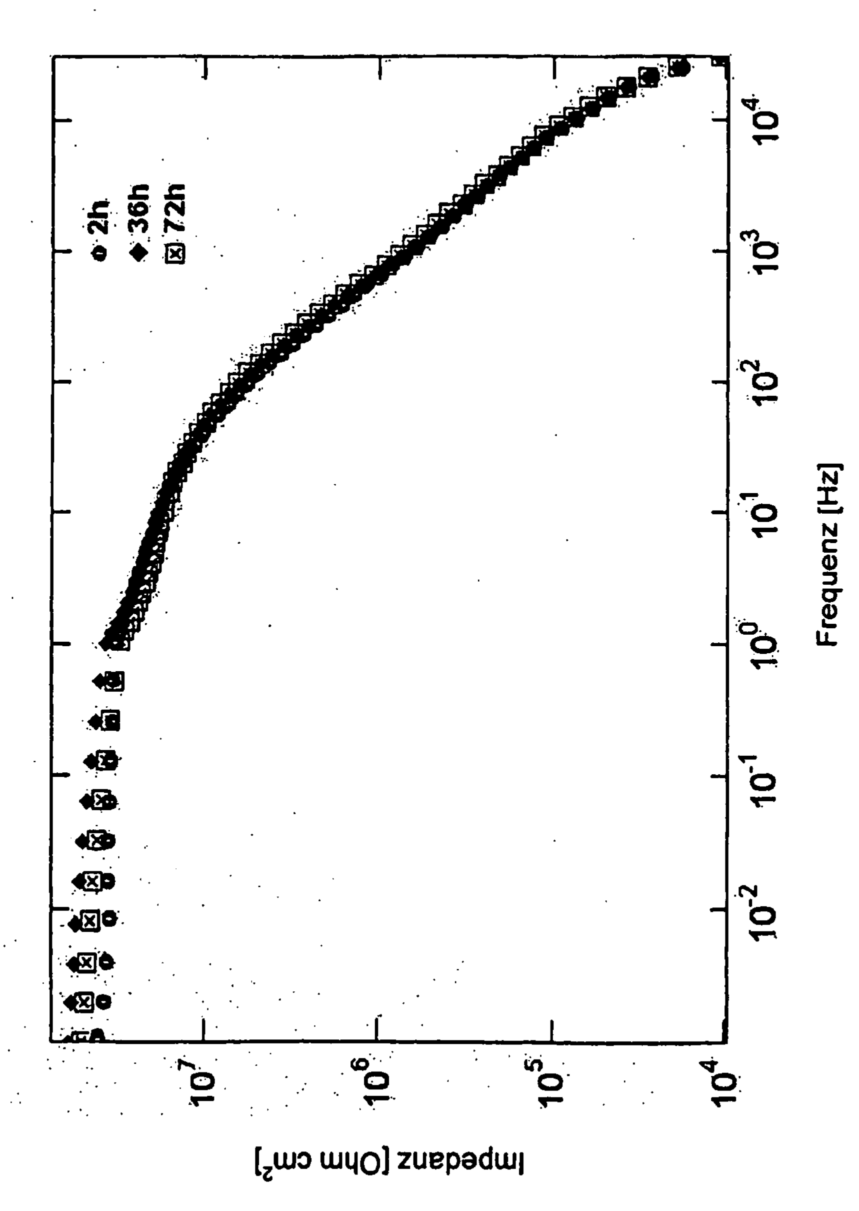
2h
36h
72h
Impedanz [Ohm cm2]
Frequenz [Hz]
10-2
10-1
100
101
102
103
104
104
105
106
107

Figur 2

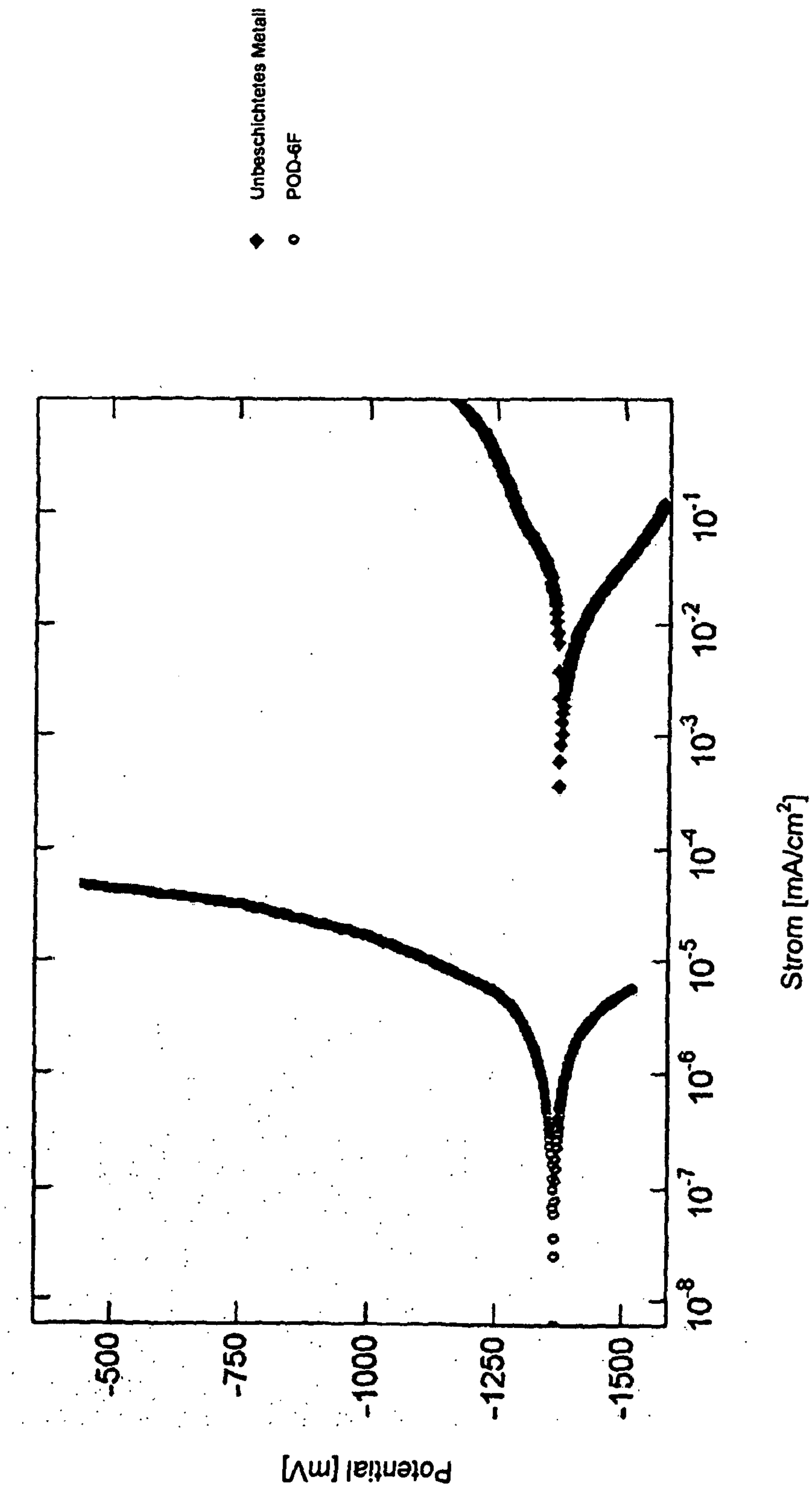
Unbeschichtetes Metall
POD-6F
Potential [mV]
-500
-750
-1000
-1250
-1500
Strom [mA/cm²]
$10^{-8}$
$10^{-7}$
$10^{-6}$
$10^{-5}$
$10^{-4}$
$10^{-3}$
$10^{-2}$
$10^{-1}$

Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20060063872 A1
- EP 0949353 B1
- US 20050067057 A1
- US 4973393 A
- US 5993567 A
- WO 9902759 A1
- DE 19913242 C2
- US 3567698 A
- US 3410834 A


### In der Beschreibung aufgeführte Nicht-Patentliteratur


- **Gomes et al.** *Polymer,* 2001, vol. 42, 851-865
- **Gomes et al.** *Polymer,* 2004, vol. 45, 4997-5004